Europäisches Patentamt

European Patent Office

Office européen des brevets

(19)

(11) Veröffentlichungsnummer: **0 371 286**
**A2**

## (12) EUROPÄISCHE PATENTANMELDUNG

(21) Anmeldenummer: 89120661.7

(51) Int. Cl.⁵: **H04B 17/00**

(22) Anmeldetag: 08.11.89

(30) Priorität: 01.12.88 DE 3840498

(43) Veröffentlichungstag der Anmeldung:
06.06.90 Patentblatt 90/23

(84) Benannte Vertragsstaaten:
**DE FR GB**

(71) Anmelder: **Rohde & Schwarz GmbH & Co. KG**
**Mühldorfstrasse 15**
**D-8000 München 80(DE)**

(72) Erfinder: **Maucksch, Thomas, Dipl.-Ing.**
**Hochriesstrasse 1a**
**D-8201 Ostermünchen(DE)**
Erfinder: **Holzmann, Gottfried, Dipl.-Ing.**
**Grafinger Platz 5**
**D-8017 Ebersberg(DE)**
Erfinder: **Körber, Frank, Dipl.-Ing. FH**
**Chiemseestrassse 11**
**D-8038 Gröbenzell(DE)**

(74) Vertreter: **Graf, Walter, Dipl.-Ing.**
**Sckellstrasse 1**
**D-8000 München 80(DE)**

(54) **Verfahren zum Erzeugen eines mit einem Nachrichtensignal modulierten und mit einem vorbestimmten Fadingprofil verzerrten Hochfrequenzsignals zum Prüfen von Hochfrequenzempfängern und Fadingsimulator zum Ausführen dieses Verfahrens.**

(57) Zum Erzeugen eines mit einer Nachricht modulierten und mit einem vorbestimmten Fadingprofil verzerrten Hochfrequenzsignals zum Prüfen von Hochfrequenzempfängern wird eine der Nachrichtenmodulation entsprechende Folge von digitalen Phasen- und Amplitudenwerten rechnerisch mit dem vorbestimmten Fadingprofil behandelt und in Speichern abgespeichert; mit diesen abgespeicherten fadingprofilbehandelten Phasen- und Amplitudenwerten wird dann ein Hochfrequenzträger amplituden- und phasenmoduliert.

EP 0 371 286 A2

# Verfahren zum Erzeugen eines mit einem Nachrichtensignal modulierten und mit einem vorbestimmten Fadingprofil verzerrten Hochfrequenzsignals zum Prüfen von Hochfrequenzempfängern und Fadingsimulator zum Ausführen dieses Verfahrens

Die Erfindung betrifft ein Verfahren laut Oberbegriff des Hauptanspruches sowie einen Fadingsimulator zum Ausführen dieses Verfahrens.

Dispersionserscheinungen durch Mehrwegausbreitung in einem Funkkanal verursachen sogenannte Fadingerscheinungen am Eingang eines Funkempfängers. Zum Prüfen von Funkempfängern im Labor unter praxisnahen Bedingungen werden solche Fadingerscheinungen in einem sogenannten Fadingsimulator künstlich erzeugt. Bei den bisher üblichen Fadingsimulatoren werden die Fadingerscheinungen des Funkkanals in Echtzeit nachgebildet. Am Eingang des Fadingsimulators wird das mit der Nachricht ideal amplituden- und/oder phasenmodulierte Hochfrequenzsignal eingespeist, im Gerät wird dieses modulierte Hochfrequenz signal ins Basisband transformiert, anschließend analog/digital gewandelt und eine Aufspaltung in eine Vielzahl von parallelen Pfaden vorgenommen, wobei für jeden einzelnen Pfad eine individuelle Pfadverzögerung und Amplitudengewichtung durchgeführt wird und jeder Pfad mit einem nichtlinearen Operanden, der Phasen- und Amplitudenfluktuationen einbringt, behandelt. Anschließend werden diese einzelnen Pfade wieder addiert und die so erhaltenen Werte wieder auf Hochfrequenz umgesetzt. Auf diese Weise werden also die der Modulation entsprechenden Phasen- und Amplitudenverläufe in Phasenund Amplitudenverläufe umgesetzt, die sowohl die Modulation als auch die Fadingbeeinflussung durch den Funkkanal wiederspiegeln. Die bekannten Fadingsimulatoren erfordern einen erheblichen Geräteaufwand und sind daher sehr teuer. Für einen breitbandigen Ausschnitt des simulierten Funkkanals ist eine hohe Signalverarbeitungsgeschwindigkeit erforderlich, wodurch der Geräteaufwand infolge der Notwendigkeit von hohen Rechengeschwindigkeiten noch größer wird.

Es ist daher Aufgabe der Erfindung, ein Verfahren zum Erzeugen eines solchen fadingprofilverzerrten Hochfrequenz-Prüfsignals für Empfänger aufzuzeigen, das mit erheblich geringerem Geräteaufwand durchgeführt werden kann und einen entsprechend einfachen und billigen Fadingsimulator zu schaffen.

Diese Aufgabe wird ausgehend von einem Verfahren laut Oberbegriff des Hauptanspruches durch dessen kennzeichnende Merkmale gelöst. Vorteilhafte Weiterbildungen insbesondere bezüglich des Aufbaus eines einfachen Fading simulators ergeben sich aus den Unteransprüchen.

Bei dem erfindungsgemäßen Verfahren wird nicht mehr in Echtzeit das mit der Nachricht modulierte Hochfrequenzsignal entsprechend fadingbehandelt, sondern die vorgegebenen Amplituden- und Phasenwerte der Nachricht, die für die Empfängerprüfung dem Hochfrequenzsignal aufmoduliert sein soll, werden durch einen Rechenvorgang mit dem gewünschten Fadingprofil behandelt. Dazu wird beispielsweise eine der Nachrichtenmodulation entsprechende geordnete Reihenfolge von Phasen- und Amplitudenwerten als Datensatz einem Rechner zugeführt, in welchem diese Wertereihe mit bekannten Rechenregeln behandelt wird, die aus dem gewünschten Fadingprofil resultieren. Diese so gewonnenen Phasen- und Amplitudenwerte werden dann als Einstellwerte der Reihe nach in gesonderten Speichern abgelegt. Bei Bedarf werden diese in einer den natürlichen Verhältnissen entsprechenden Geschwindigkeit aus den Speichern wieder ausgelesen und damit dann ein Hochfrequenzträger entsprechend in der Phase und Amplitude eingestellt. Für die Ausführung dieses erfindungsgemäßen Verfahrens ist der Geräteaufwand extrem niedrig, ein zur Ausführung geeigneter Fadingsimulator kann daher sehr preiswert aufgebaut werden. Für das erfindungsgemäße Verfahren ist lediglich erforderlich, daß die zu sendende Nachricht im voraus bekannt ist und kein kontinuierlicher Betrieb nötig ist, da bei dem erfindungsgemäßen Verfahren die Zeitdauer der Nachrichtenübertragung durch die zur Verfügung stehenden Speicherplätze begrenzt ist, also nur ein Nachrichtenpaket begrenzter Länge für die Empfängermessung zur Verfügung steht. Da bei dem erfindungsgemäßen Verfahren nicht in Echtzeit gearbeitet wird, sondern die fadingbehandelten Phasen- und Amplitudenwerte vor der eigentlichen Messung vorbereitet und erarbeitet werden, also beliebig viel Zeit zur Verfügung steht, ist der Geräteaufwand minimal, es genügt ein einfacher Tischrechner hierfür.

Das erfindungsgemäße Verfahren besitzt darüber hinaus noch den Vorteil, daß auch Hochfrequenzempfänger geprüft werden können, die nach dem Frequenzsprungverfahren (Frequency Hopping) arbeiten, was mit den bekannten Fadingsimulatoren nur begrenzt möglich ist, da sie eine begrenzte Bandbreite von beispielsweise nur 5 MHz besitzen. Beim erfindungsgemäßen Verfahren kann der Einfluß des Frequenzsprungs bei im voraus bekannter Sprungsequenz unmittelbar in die Berechnung der Phasen- und Amplitudenwerte miteinbezogen werden und es ist ohne zusätzlichen Geräteaufwand eine beliebige Hopping-Bandbreite möglich.

Bei dem erfindungsgemäßen Verfahren sind außerdem Fluktuationserscheinungen in allen Einzelheiten in jedem Zeitpunkt bekannt, Fluktuationserscheinungen können daher nicht nur durch ihre statistischen Größen beschrieben werden, sondern ihr Zeitverlauf ist stets genau bekannt, so daß genau reproduzierbare Messungen möglich sind.

Das erfindungsgemäße Verfahren ist für beliebige Nachrichten-Modulationsarten anwendbar, für reine Phasen-oder Frequenzmodulationen eines Hochfrequenzträgers mit der vorgegebenen Nachricht oder für reine Amplitudenmodulationen oder gegegebenenfalls auch für kombinierte Phasen- und Amplitudenmodulationen.

Die Erfindung wird im folgenden anhand schematischer Zeichnungen an einem Ausführungsbeispiel näher erläutert.

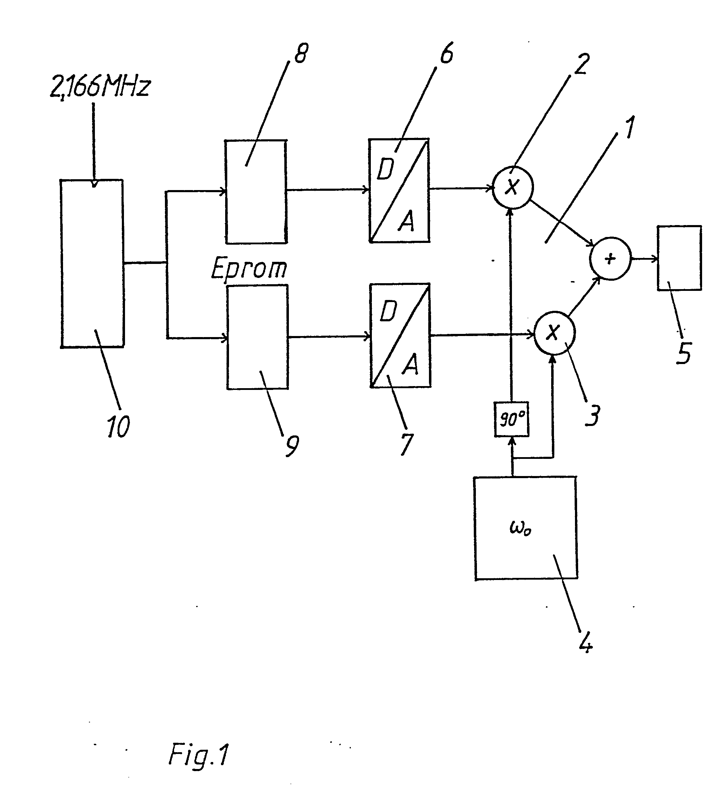

Fig. 1 zeigt das Prinzipschaltbild eines nach dem erfindungsgemäßen Verfahren arbeitenden Fadingsimulators mit einem digitalen Modulator 1 bestehend aus zwei Mischern 2 und 3, die aus einem Trägerfrequenzgenerator 4 mit gegenseitiger 90° Phasenverschiebung mit einer Trägerfrequenz angesteuert sind, mit welcher ein Hochfrequenzempfänger 5 unter vorbestimmten Fadingbedingungen auf seine Brauchbarkeit geprüft werden soll. Die Mischer 2 und 3 werden über Digital/Analog-Wandler 6 und 7 mit den komplexen Amplituden- und Phasenbestandteilen I und Q eines Modulationssignales angesteuert, die in zwei digitalen Speichern 8 und 9 (EPROM) abgespeichert sind und die über einen Taktgenerator 10 bei der Empfängerprüfung auslesbar sind. Die Speicher 8 und 9 besitzen beispielsweise eine Speicherkapazität von zusammen 3 MBit. Der Taktgenerator 10 liest beispielsweise mit einer Taktfrequenz von 2,166 MHz also alle 461,5 ns einen I-und Q-Wert aus den Speichern 8 und 9 aus, was einer Signalverarbeitungsbandbreite von ca. 1 MHz entspricht. Bei einer Wortbreite von 2 . 12 = 24 BIT für die Speicher 8 und 9 beträgt daher die zur Verfügung stehende Spieldauer 60,49 ms, d.h. für die vorgegebene Speicherkapazität steht für eine Empfängermessung unter Fadingbedingungen ein modulierter Hochfrequenzträger ca. 60 ms lang zur Verfügung. Dies ist für die meisten Empfängerprüfungen ausreichend.

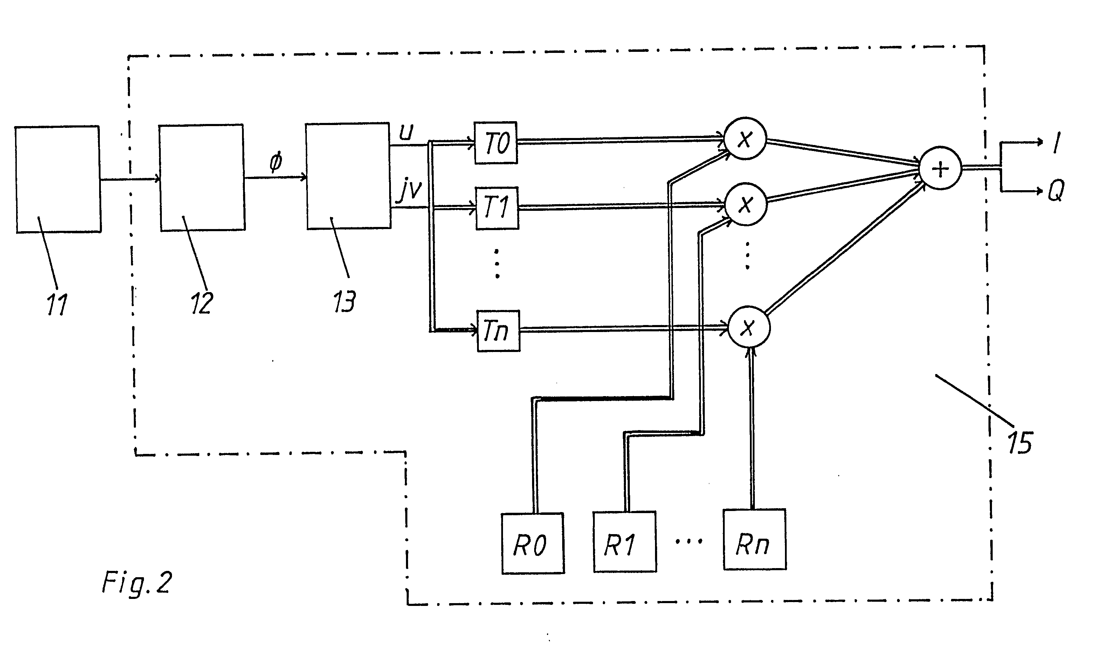

Fig. 2 zeigt schematisch die Berechnung der in den Speichern 8 und 9 abgespeicherten Amplituden- und Phasenwerte I und Q. In dem Beispiel nach Fig. 2 wird eine reine Phasenmodulation angenommen. Der zeitlich auf beispielsweise 60 ms begrenzte serielle digitale Datenstrom (in Phasenmodulation auf einen Träger aufzumodulierende Nachricht) 11 wird einem Rechner 15 zugeführt, in welchem folgende Rechenoperationen durchgeführt werden.

In dem Beispiel soll ein bekannter GMSK-Modulator (Phasenmodulator für Minimum-Shiftkeying mit Gauß-Filter) angewendet werden, bei dem der serielle Datenstrom zunächst ein sogenanntes Gauß-Filter 12 durchläuft und hierbei durch Integration und durch digitale Filterung die Phaseninformation gewonnen wird, die anschließend dann rechnerisch durch eine sin/cos-Berechnung 13 in die digitalen komplexen Amplituden- und Phasenwerte u und jv umgerechnet werden. Diese komplexen Bestandteile u und jv werden dann wiederum rechnerisch in an sich bekannter Weise mit einem vorbestimmten Fadingprofil behandelt, wobei rechnerisch eine Aufteilung auf mehrere Rechenpfade vorgenommen wird. In jedem dieser Rechenpfade wird das Signal um eine bestimmte Zeit $t_0$ bis $t_n$ verzögert und gleichzeitig mit einem komplexen Rauschsignal dargestellt durch die Rauschgenerator-Rechenwerte $r_0$ bis $r_n$ multipliziert. Diese Rechenpfade werden zeitlich nacheinander abgearbeitet, sie sind nur der Anschaulichkeit halber in Fig. 2 als parallele Rechenpfade dargestellt. Natürlich sind auch die Rauschgeneratoren nur entsprechende Rechenprogramme des Rechners 15. In den Rauschgeneratoren wird außerdem noch die gewünschte Dopplerfrequenz und die jeweils gewünschte Geländeform des zu berücksichtigenden Fadingprofils rechnerisch berücksichtigt. Die Dopplerfrequenz ergibt sich aus der Geschwindigkeit eines zu simulierenden Fahrzeuges, in welchem der zu prüfende Empfänger 5 untergebracht ist. Um die Vielfalt der in der Natur vorhandenen Geländeformen einzuschränken ist eine begrenzte Anzahl von vorbestimmten Geländeformen vorgegeben, beispielsweise Geländeform flache ländliche Gegend, hügelige Gegend, Stadt oder dgl. Die Produkte der einzelnen Rechenpfade werden schließlich addiert und als komplexe Amplituden- und Phasenwerte I und Q in die Speicher 8 und 9 eingespeichert. Die rechnerische Bewertung der digitalen Amplituden- und Phasenwerte u und jv der ideal und unverfälscht mit der Nachricht modulierten Modulationsinformation wird bei dem erfindungsgemäßen Verfahren in einem Rechner also rein rechnerisch, in eine Folge von Amplituden-und Phasenwerte I und Q umgewandelt, die damit sowohl die Modulation als auch das gewünschte Fading-Verhalten enthalten.

Soll ein Empfänger 5 mit einem bestimmten Fadingprofil geprüft werden, so wird nach dem Rechenprinzip gemäß Fig. 2 eine zeitlich begrenzte und zu modulierende Nachricht fadingbehandelt und die entsprechenden komplexen Werte in die Speicher 8 und 9 eingespeichert. Zur Empfängerprüfung wird dann nur noch das sowohl die Modulation der Nachricht als auch die Fadingsimulation enthaltende abgespeicherte I-Q-Ergebnis aus den Speichern 8 und 9 ausgelesen und damit der entsprechend der gewünschten Meßfrequenz gewählte Hochfrequenzträger moduliert, der dann dem Empfängereingang zugeführt wird. Kann der Empfänger das durch die Fadingsimulation mehr oder weniger stark verzerrte digitale Modulationssignal noch richtig verarbeiten, ist der Empfänger in Ordnung. Nach diesem Prinzip kann also jeder Empfänger daraufhin geprüft wer den, wie er unter bestimmten unterschiedlichen Fadingbedingungen arbeitet. Wenn die für bestimmte Empfängerprüfungen vorgegebenen Nachrichten bekannt sind und wiederholt benutzt werden sollen, ist es vorteilhaft, im voraus hierfür die entsprechenden Modulationswerte in den Speichern 8 und 9 abzuspeichern und bei Bedarf nur noch die für eine Messung gewünschten fadingprofilbehandelten Modulationswerte aus den Speichern auszulesen, hierdurch kann die Prüfzeit für Empfänger noch weiter herabgesetzt werden.

Bei digitalen Funknetzen ist oftmals eine Empfängermessung erforderlich, bei der auf der gleichen Trägerfrequenz ein zweiter Sender mit kleinerem Pegel arbeitet. Der Empfänger muß in der Lage sein, dieses zweite Sendersignal zu unterdrücken und die Nachricht des eigentlichen Nachrichtensenders richtig zu erkennen. Bei dem erfindungsgemäßen Verfahren ist für diesen zweiten Sender kein zusätzlicher Fadingsimulator nötig, sondern gemäß der Erfindung kann dieses zweite Signal einfach in die Berechnung der Phasen- und Amplitdenwerte miteinberechnet werden, was keinerlei Mehraufwand bedeutet.

**Ansprüche**

1. Verfahren zum Erzeugen eines mit einem Nachrichtensignal modulierten und mit einem vorbestimmten Fadingprofil verzerrten Hochfrequenzsignals zum Prüfen von Hochfrequenzempfängern, dadurch **gekennzeichnet,** daß eine dem Nachrichtensignal entsprechende Folge von digitalen Phasen- und Amplitudenwerten (u,j,v) rechnerisch mit dem vorbestimmten Fadingprofil behandelt und in Speichern abgespeichert wird und mit diesen abgespeicherten fadingprofilbehandelten Phasen- und Amplitudenwerten (I,Q) ein Hochfrequenzträger amplituden- und phasenmoduliert wird.

2. Verfahren nach Anspruch 1, dadurch **gekennzeichnet,** daß für mehrere unterschiedliche Nachrichtensignale entsprechend unterschiedliche fadingprofilbehandelte Phasen- und Amplitudenwerte (I,Q) erzeugt und getrennt in Speichern abgespeichert werden und wahlweise zur Modulation des Hochfrequenzträgers auslesbar sind.

3. Fadingsimulator zum Ausführen eines Verfahrens nach Anspruch 1 oder 2, **gekennzeichnet** durch zwei Digitalspeicher (8,9) in welchen die fadingprofilbehandelten digitalen Phasen- und Amplitudenwerte (I,Q) des Nachrichtensignals (11) getrennt gespeichert sind und welche über Digital/Analog-Wandler (6,7) mit einem digitalen Modulator (1) verbunden sind, der mit einem die Frequenz des gewünschten Hochfrequenz-Prüfsignals aufweisenden Träger gespeist ist und dessen Ausgang mit dem Eingang eines zu prüfenden Empfängers (5) verbindbar ist.

Fig.1

Fig.2